# EUROPÄISCHE PATENTANMELDUNG

(11) **EP 0 911 186 A2**
(43) Veröffentlichungstag der Anmeldung: **28.04.1999**
(21) Anmeldenummer: 98118757.8
(22) Anmeldetag: 05.10.1998
(51) Int. Cl.: B60C 9/08, B60C 9/02

(54) **Radialkarkasse für einen Fahrzeugluftreifen und Verfahren zu deren Herstellung**

(30) Priorität: 22.10.1997 DE 19746618
(71) Anmelder: Continental Aktiengesellschaft, 30165 Hannover (DE)
(72) Erfinder: Hahn, Michael, 30659 Hannover (DE); Roik, Geert, 38162 Cremlingen (DE); Fischer, Stefan, 30459 Hannover (DE); Fidan, Mehmet Sadettin, 30827 Garbsen (DE); Boltze, Carsten, 30974 Wennigsen (DE)

(57) **Zusammenfassung**

Die Erfindung bezieht sich auf eine Radialkarkasse (1) mit textilen Festigkeitsträgern (5) für Fahrzeugluftreifen (2) mit einem Verhältnis (H/B) seiner Höhe (H) zu seiner Breite (B) größer oder gleich 55 %, wobei die Radialkarkasse (1) im Querschnitt ununterbrochen von Wulstkern (31) zu Wulstkern (3r) verläuft und mindestens eine Lage (4) von in einer Gummimischung eingebetteten textilen Festigkeitsträgern (5) aufweist, die (5) einen im wesentlichen axial verlaufenden Splice (6) aufweist, an dem sich die Enden (7, 8) der zunächst flach - z. B. auf einem Kalander - erzeugten Lage (4) überlappen.

Um auch mit den üblichen Endlosfügeverfahren für die Karkasslage, die eine Überlappung der beiden Karkasslagenenden im Splice-Bereich vorsehen und damit zu einer dort erhöhten Fadendichte führen, Einschnürungen der Seitenwand zu verringern, vorzugsweise ganz zu vermeiden, wird erfindungsgemäß vorgeschlagen, dass zwischen den übereinander liegenden Enden (7, 8) der Lage (4) ein Gummistreifen (9) angeordnet ist, der in einem Bereich (101) dicht oberhalb des einen Wulkernes (31) beginnt und bis zu einem Bereich (10r) dicht oberhalb des anderen Wulstkernes (3r) reicht.

## Beschreibung

Die Erfindung bezieht sich auf eine Radialkarkasse mit textilen Festigkeitsträgern gemäß dem Oberbegriff des Patentanspruches 1 für einen Fahrzeugluftreifen mit einem Verhältnis H/B seiner Höhe zu seiner Breite von größer oder gleich 0,55. Eine demgemäße Radialkarkasse verläuft im Querschnitt ununterbrochen von Wulstkern zu Wulstkern und weist mindestens eine Lage von in einer Gummimischung eingebetteten textilen Festigkeitsträgern auf. Diese Lage weist einen im wesentlichen axial verlaufenden Splice auf, an dem sich die Enden der zunächst flach - z. B. auf einem Kalander - erzeugten Lage überlappen. Dabei ist in einem Bogenlängenbereich des Querschnittes des Splices zwischen den übereinander liegenden Enden der Lage ein Gummistreifen angeordnet.

Die Erfindung bezieht sich zudem auf ein Verfahren zur Herstellung einer solchen Karkasse gemäß dem Oberbegriff des Patentanspruches 6.

Gattungsgemäße Radialkarkassen und gattungsgemäße Herstellverfahren sind vorbekannt; sie weisen in der Regel nur eine einzige Lage mit textilen Festigkeitsträgern in Cordlage, also parallel zueinander verlaufende und im wesentlichen ohne quer dazu verlaufende Festigkeitsträger, auf. Gattungsgemäße Radialkarkassen zeigen die Besonderheit, dass sie - insbesondere sichtbar im Seitenwandbereich, aber auch bei feiner Messtechnik im Radialkraftschrieb nachweisbar - infolge der höheren Fadendichte am Splice der die Festigkeitsträger enthaltenden Karkasslage(n) Ungleichförmigkeiten sowohl in ihren Abmessungen als auch in ihrer Steifigkeit zeigen.

Als besonders störend wird von vielen Reifenkäufern die splice-bedingte Einschnürung im Seitenwandbereich empfunden. Dieses Problem tritt insbesondere bei Reifen mit einem H/B-Verhältnis zwischen 0,65 und 0,95 auf, ist aber auch in abgeschwächter Form im H/B-Bereich zwischen 0,55 und 0,65 nachweisbar. Am deutlichsten ist dieses Problem bei den sogenannten "Mini-Spare-Reifen" der Fall, den besonders schmal gehaltenen Ersatzrädern, die teilweise zur Vergrößerung des Kofferraumvolumens von Fahrzeugherstellern vorgesehen sind.

Zwar stellt diese Einschnürung im wesentlichen nur ein ästhetisches Problem dar, dieses Problem ist aber außer mit argumentativen Methoden des Marketing auch mit technischen Mitteln lösbar, wie die Erfinder erkannt haben.

Es sind bereits zahlreiche Vorschläge zur Minderung oder gar Beseitigung der Seitenwandeinschnürungen gemacht worden, z. B. in **DE-PS 44 39 010 C1**, dergemäß eine Festigkeitsträger enthaltende Lage an gleicher Umfangsstelle eine Überlappung aufweisen soll wie eine keine Festigkeitsträger enthaltende weitere Gummischicht und in **DE-PS 44 39 011 C1**, dergemäß die Festigkeitsträger außerhalb der Dickenmitte des lagenförmigen Gummi-Faden-Verbundes, auch kurz "Lage" genannt, angeordnet sein sollen. Als nächstliegender Stand der Technik aber erscheint **EP-PA 0 407 134 A1**; ihrgemäß soll zumindest in den Wulstbereichen ein weiches polsterndes Gummistreiflein so angeordnet sein, dass im Splice-Bereich die Verbindung zwischen Wulstkern radialer Karkasslage weicher wird. Der dort so geschaffene zusätzliche Verformungsweg soll die Verformungsweg-Einbuße infolge der verdoppelten Fadendichte im Splice-Bereich zumindest teilweise kompensieren.

Letztgenannter Vorschlag ist aber mit dem Problem behaftet, dass - elastisch - besonders verformungswillige Vulkanisate nur aus - plastisch - besonders verformungswilligen Kautschukmischungen zu gewinnen sind.

Besonders verformungswillige Mischungen zeigen naturgemäß einen besonders großen Gradienten ihres Verformungswillens über der - tages- und jahreszeitlich schwankenden - Temperatur. Zumindest solange, wie Reifenfabriken nicht voll klimatisiert sind, steigen also die Maßschwankungen.

Die Erfinder haben sich die **Aufgabe** gestellt, insbesondere die von außen sichtbare Einschnürung der Reifenseitenwände im Bereich des Splices der die Festigkeitsträger enthaltenden Lage - im folgenden auch kurz Karkasslage genannt - wesentlich zu vermindern oder gar vollständig zu beseitigen. Vorzugsweise sollte dabei auch die Steifigkeitsschwankung verringert und damit der Radialkraftschrieb vergleichmäßigt werden. Die Lösung sollte keine Ursache für eine Vergrößerung der Schwankungen anderer Maße setzen.

Die nächstliegende Lösung für eine solche Aufgabenstellung wäre die Vermeidung der Überlappungsstelle der Karkasslage; dies könnte, wie schon die letztgenannte Schrift ausführt, durch einen Stumpfstoß der Karkasslagenenden erreicht werden. Dies kann auch erzielt werden durch den Aufbau der gesamten Karkasse aus einem einzigen Faden. Ersteres hat aber bislang nicht die erforderliche Prozess-Sicherheit erbracht und Zweiteres ist recht zeitaufwendig und damit teuer. In weiterer Verengung der Aufgabenstellung soll also an der bislang üblichen Existenz einer Überlappungsstelle der Karkasslage festgehalten werden.

Ausgehend von den gattungsbildenden Merkmalen des Patentanspruches 1 wird diese Aufgabe erfindungsgemäß dadurch gelöst, dass der besagte Bogenlängenbereich, in dem zwischen den übereinander liegenden Enden der Lage ein Gummistreifen angeordnet ist, in einem Bereich dicht oberhalb des einen Wulkernes beginnt und bis zu einem Bereich dicht oberhalb des anderen Wulstkernes reicht.

Zweckmäßigerweise läuft dieser zwischengelegte Gummistreifen zu seinen in Wulstnähe plazierten Enden hin in einer spitzen Verjüngung aus.

Die optimale Dickenbemessung dieses zwischengelegten Streifens hängt von der Bemessung und Steifigkeit der benachbarten Bauteile ab. Der Durchschnittsfachmann kann dieses Optimum leicht für jede Reifentype durch eine kleine Versuchsreihe bestimmen; das Optimum liegt dort, wo auf der Seitenwand keine Einschnürung mehr sichtbar ist. Dieses Optimum liegt bei PKW-Reifen in dem Bereich zwischen 0,5 und 2,0 mm, bei Lieferwagen-Reifen (PKW-Größen in "reinforced"-Ausführung) und bei LLKW-Reifen mit Textilkarkasse zwischen 0,7 und 2,8 mm.

Die Erfinder erklären sich die Wirkung ihrer Erfindung damit, dass die Beabstandung der Festigkeitsträger im Splice-Bereich voneinander die äußeren Fäden auf einen größeren Bogen und die inneren Fäden auf einen kleineren Bogen von Wulst zu Wulst zwingt. Der äußere Faden entzieht sich dieser Dehnung zwar teilweise dadurch, dass er bei der Bombage infolge der Plastizität des Kautschukes im Wulstbereich sich unter dem Wulstkern durchzieht, aber er erfährt zumindest die gleiche Dehnung wie die Karkassfäden außerhalb des Splices.
(nachfolgend unverändert die ursprünglichen Seiten 4 bis 12 einschließlich)

Der innere Faden hingegen wird durch die Biegung bei der Bombage der zunächst flach aufgebauten Karkasse auf eine kürzere Bogenlänge gezwungen und dabei gestaucht. Dieser Stauchung widersetzt er sich infolge der Biegeschlaffheit seiner einzelnen textilen Filamente, aus denen er seilartig aufgebaut ist, im wesentlichen nicht. Es erfolgt also kein Ausgleich durch Kautschukfluss analog dem Verhalten an der Verankerung des äußeren Fadens.

In dieser Konfiguration wird nun die erfindungsgemäß erstellte Karkasse oder der gesamte Reifen, der diese Karkasse enthält, vulkanisiert, womit der vorbeschriebene Spannungszustand konserviert wird. Beim Aufpumpen des erfindungsgemäßen Reifens werden die fadenförmigen textilen Festigkeitsträger gedehnt. Dabei übernehmen aber die an der Splice-Stelle vorhandenen inneren Fäden erst dann Spannung, wenn sie entstaucht sind, das heißt, wenn ihre aufgezwungene Dehnung im Betrieb größer wird als ihre bei der Bombage erlittene Stauchung. Bis zu dieser Dehnung verhalten sich die inneren Fäden also praktisch wie gerissene Fäden; sie tragen nicht. Man könnte sie auch als Blindfäden bezeichnen. Wegen ihres Nichttragens tragen sie bis dahin auch nicht zur Biege- und zur Zugsteifigkeit bei.

Infolgedessen sehen erfindungsgemäße Reifen nicht nur gleichmäßiger aus, sie sind es auch, wie die gesteigerte Gleichmäßigkeit des Radialkraftschriebes zeigt. Die Funktion des distanzierenden Streifens ist die, die Grenzdehnung, bis zu der dieser beschriebene Effekt funktioniert, so weit zu erhöhen, dass sie die in der üblicherweise bei 4 bar Innendruck durchgeführten Abnahmeprüfung auftretenden Dehnungen zumindest nahezu erreicht, vorzugsweise sogar leicht übertrifft.

Aus konstruktiven Gründen ist es gemäß Anspruch 3 bevorzugt, dass der Gummistreifen genau von der radial äußeren Begrenzungsfläche des einen Wulstkernes bis zur radial äußeren Begrenzungsfläche des anderen Wulstkernes reicht. Auf diese erreicht die Erfindung ihre höchste Wirksamkeit und es gibt genügend radialen Raum für eine sehr spitze Verjüngung des zwischengelegten Streifens zu den Wulstkernen hin. Weil solche Verjüngungen bei der Herstellung zum Faltenwurf neigen, empfiehlt sich deren Anheftung an den Kernreiter während des Reifenaufbaues, was eine Stabilisierung bewirkt.

Diese besonders feine Lösungsausführung erfordert allerdings auch eine besonders präzise Fertigung. Nahezu die gleiche Wirksamkeit erreicht die Erfindung mit der bevorzugten Weiterbildung nach Anspruch 2, erlaubt aber größere Toleranzintervalle in der Herstellung des zwischenzulegenden Kautschukstreifens.

Gemäß dieser Weiterbildung reichen die besagten Bereiche, in denen der Gummistreifen links und rechts endet, von der radial äußeren Begrenzungsfläche der Wulstkerne bis zu maximal 10 mm radial außerhalb des radial äußeren Endes des an sich bekannten Kernfüllers. Irgendwo in diesem Bereich, weiter bevorzugt etwa auf der Hälfte der radialen Bauhöhe des Kernreiters, haben demgemäß die Streifenenden zu liegen.

Bisweilen werden auch Reifen nahezu ohne oder ganz ohne Kernreiter vorgeschlagen; in diesem Falle sollten die unteren - also dem Kern zugewandten - Enden des aufzulegenden Streifens maximal 25 mm oberhalb der radial äußeren Kante des betreffenden Wulstkernes liegen.

Neben einer verbesserten Reifengleichförmigkeit müssen erfindungsgemäße Reifen natürlich auch eine gute Dauerhaltbarkeit erbringen. Die besten Ergebnisse in dieser Disziplin sind nach den bisherigen Erfahrungen zu erreichen, wenn gemäß Anspruch 4 der erfindungsgemäß im Splice-Bereich aufgebrachte Gummistreifen aus der gleichen Gummimischung besteht wie die Gummierung der Karkasslage, deren Enden durch diesen Gummistreifen im Bereich des Splices radial beabstandet sind.

Bekanntlich sind heutzutage nahezu alle Reifen gemäß einer alten Erfindung aus unserem Hause so ausgebildet, dass sie schlauchlos gefahren werden können oder gar schlauchlos gefahren werden müssen. Daran sollte vorzugsweise auch für erfindungsgemäße Reifen festgehalten werden. Dazu sollten sie gemäß Anspruch 5 auf ihrer radial inneren Seite in an sich bekannter Weise einen Innenliner aus einer Butylkautschuk enthaltenden Mischung aufweisen.

Gemäß dem Verfahrensanspruch 6 sollte die den späteren Innenliner bildende Schicht in an sich bekannter Weise vor der die Karkasslage(n) bildenden Schicht auf die Aufbautrommel gebracht und zur Endlosigkeit gefügt werden. Das Festhalten an diesen an sich bekannten Merkmalen beinhaltet das nicht selbstverständliche Merkmal, dass der Splice des Innenliners keinesfalls gleichzeitig mit dem Splice der Karkasslage ausgeführt wird, sondern zuerst der Splice nur des Innenliners ausgeführt wird und später dann der Splice der Karkasslage.

So nämlich wird auf einfache Weise erreicht, dass nichts von dem mechanisch weniger belastbaren Innenliner-Gummi in den Splice-Bereich der Karkasslage verquetscht wird. Die Gummierung der die Karkasslage bildenden Cordgewebeschicht enthält in der Regel als Polymer große Mengen des - bekanntlich gegenüber Butylgummi höher belastbaren - Gummis aus Naturkautschuk.

Die Unterdrückung der Butylgummiverquetschung in den Splice-Bereich führt zum alleinigen Vorliegen der höher belastbaren Gummimischung im Splicebereich. Auf diese Weise wird eine besonders hohe Dauerhaltbarkeit erreicht.

Gemäß dem Verfahrensanspruch 6 soll vor dem Legen des oberen Endes der Karkasslage auf deren unteres Ende, zweckmäßigerweise bereits direkt bei Beginn des Auflegens, ein den späteren Gummistreifen bildender Kautschukstreifen auf das untere Ende der Lage gelegt werden. Dieser Kautschukstreifen kann auch noch früher aufgebracht werden, nach einer weiteren vorteilhaften Ausgestaltung bereits vor dem Beginn des Auflegens des die spätere Karkasslage bildenden Streifens auf die Aufbautrommel; der Streifen kann sogar direkt beim Schneiden des die spätere Karkasslage bildenden Streifens hinter dem Kalander aufgebracht werden.

Die Erfindung wird nachfolgend anhand von vier Figuren näher erläutert. Es zeigt:
- Fig. 1: den Beginn des Aufbringens der Karkasslage mit schon zuvor aufdoubliertem distanzierenden Kautschukstreifen,
- Fig. 2: das überlappende Aufbringen des Endes der Karkasslage,
- Fig. 3: einen ausschnittsweisen Längsschnitt durch einen erfindungsgemäßen Fahrzeugluftreifen im Splice-Bereich der einzigen Karkasslage und
- Fig. 4: die obere Hälfte eines Querschnittes durch den selben Fahrzeugluftreifen im Splice-Bereich.

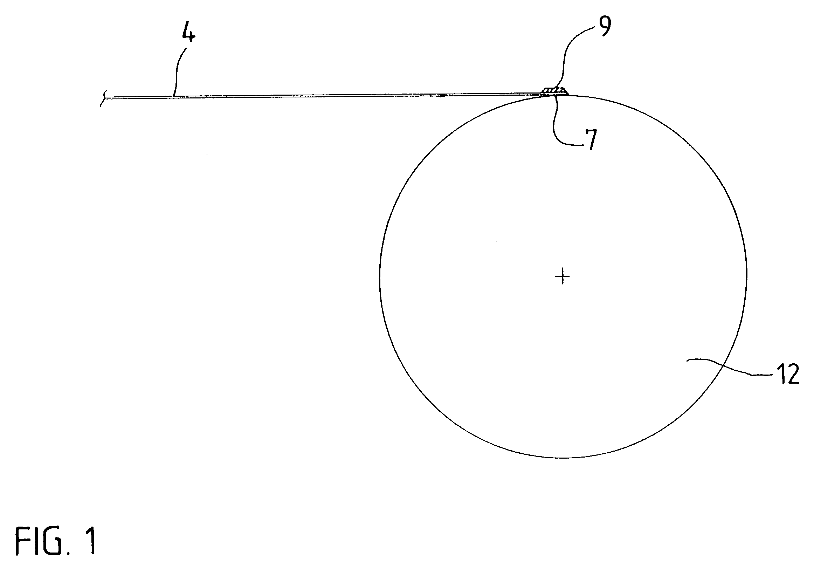

**Figur 1** zeigt in einem Schnitt entsprechend der Längsrichtung des letztlich herzustellenden Reifens, nachfolgend Längsschnitt genannt, den Beginn des Aufbringens der Karkasslage 4 auf eine Trommel 12. Die in der Lage 4 eingebetteten Festigkeitsträger sind in dieser wie auch in der folgenden Figur nicht eigens dargestellt, weil dies nur bei übertrieben dargestellter Dicke der Lage 4 angesichts der Strichstärke möglich gewesen wäre. Einer maßstabsgerechten Darstellung wurde der Vorzug gegeben.

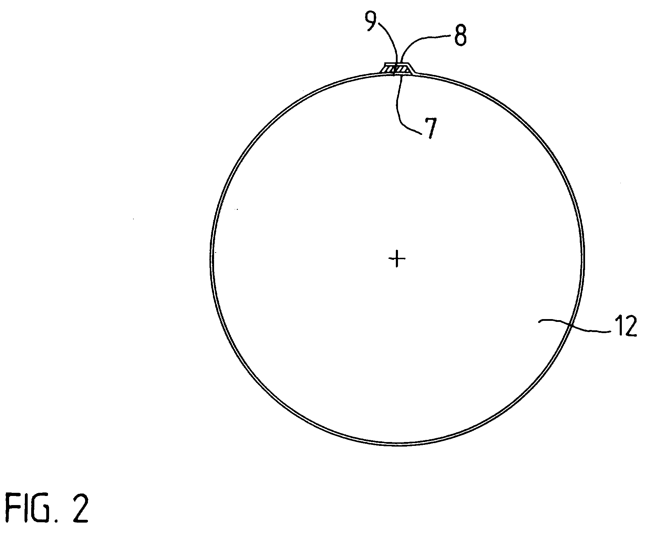

Auf das zuerst aufzulegende Ende 7 - auch als "Anfang" bezeichnet - des bereits abgelängten Streifens, der die Karkasslage 4 bilden soll, ist bei dieser Ausführung bereits der Kautschukstreifen 9 aufdoubliert, der in der fertigen Radialkarkasse die Distanzierung der beiden Karkasslagenenden 7 und 8 im Bereich des Splices 6 bewirkt, wie dies die **Figur 2** zeigt. Die in dieser Ausführungsform verwendeten Baumwollfäden 11 dienen der Luftabfuhr.

Figur 2 zeigt das überlappende Aufbringen des anderen Endes 8 der Karkasslage 4. Die Umfangserstreckung des erfindungsgemäß distanzierenden Streifens 9 sollte - wie hier gezeigt - moglichst genau mit der Umfangserstreckung der Überlappung 6 selbst übereinstimmen. Sowohl das vor- als auch das nachlaufende Ende des Streifens 9 ist zweckmäßigerweise insoweit abgeschrägt, dass die Entstehung von Luftkavernen ausgeschlossen ist. Die Luftabführung kann ferner dadurch unterstützt werden, dass der Streifen 9 am vor- und nachlaufenden Ende Baumwollfäden 11 enthält.

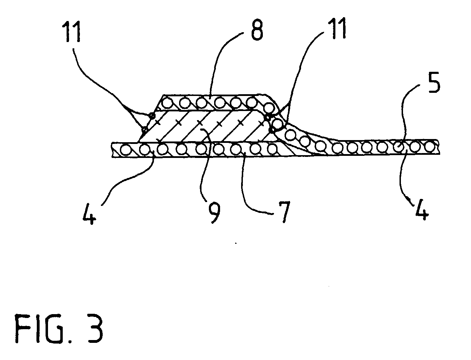

Figur 3 zeigt einen ausschnittsweisen Längsschnitt durch einen erfindungsgemäßen Fahrzeugluftreifen im Splice-Bereich der einzigen Karkasslage 4 im vergrößerten Maßstab. Dabei sind nun auch die einzelnen, axial verlaufenden Festigkeitsträger 5 der Lage 4 dargestellt. Der Splice ist als Überlappung 6 der beiden Lagenenden 7 und 8 ausgeführt, zwischen denen der Gummistreifen 9 als Distanzhalter angeordnet ist.

Um von hier aus zu einem fertigen Reifen zu gelangen, sind darüber in an sich bekannter Weise ggf. eine Bandage, Gürtellagen und ein Laufstreifen anzuordnen. Unter der so gesplicten Karkasslage ist in der Regel einen Innenliner aus einer Butylkautschuk enthaltenden Mischung anzuordnen. Weil all diese Bauteile vorzugsweise in üblicher Technik ausgeführt sind, sind sie in dieser Figur zur Konzentration auf das Wesentliche nicht dargestellt.

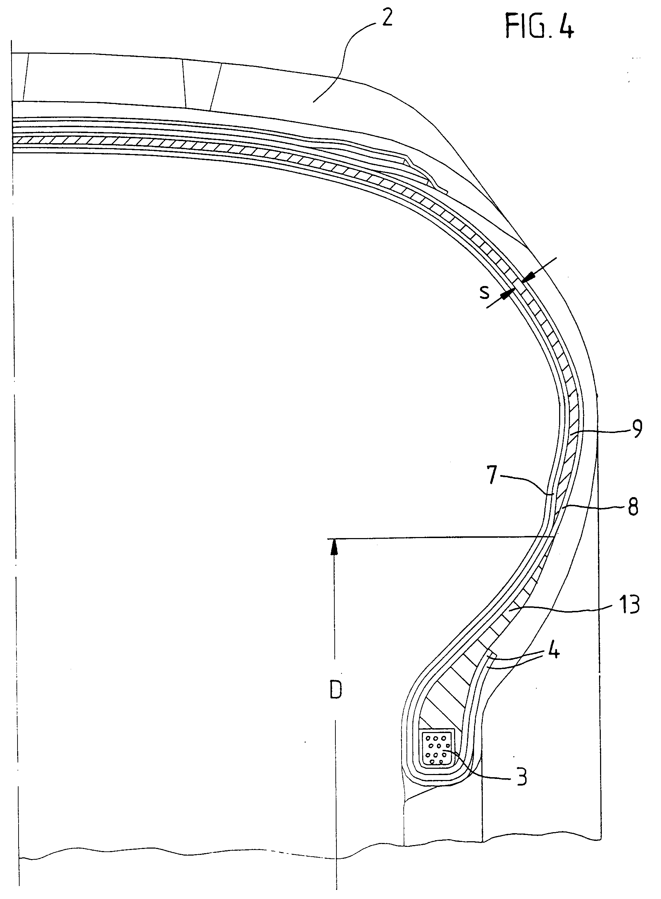

Figur 4 zeigt die obere rechte Hälfte eines Querschnittes durch einen Fahrzeugluftreifen 2 der Dimension 195/65 R 15 im Splice-Bereich. Auch diese Figur ist maßstabsgerecht; der Maßstab beträgt 1:1,5. Dieser Reifen 2 hat ein H/B-Verhältnis von 65%. Um die Wulstkerne 3 ist in an sich bekannter Weise eine Festigkeitsträger (strands) enthaltende Lage (layer) 4 geschlungen, die im Bereich des Splices gedoppelt erscheint. Auf der radial äußeren Seite der Wulstkerne 3 (bead cores) sitzt in an sich bekannter Weise jeweils ein Kernreiter (bead filler or apex) 13, dessen radial äußerer Durchmesser mit D bezeichnet ist. Der Innendurchmesser der Kernreiter 13 ist mit d bezeichnet und stimmt mit dem Außendurchmesser der Wulstkerne 3 überein.

In diesem Ausführungsbeispiel beginnt der erfindungsgemäß distanzierende Gummistreifen 9 realiter 2 mm radial außerhalb des Kernreiters 13. Zur Illustration des in Anspruch 2 genannten Intervalles für das radial innere Ende des Streifens 9 ist dieses Intervall hier in geschweifter Klammer gezeigt und mit dem Bezugszeichen I versehen; es reicht von d bis zu D+10mm.

Analog der zugespitzten Gestaltung im zuvor gezeigten Längsschnitt gemäß den Figuren 1 bis 3 ist dieser Streifen 9 bevorzugt auch im Querschnitt an seinen - nach radial innen weisenden - Enden zugespitzt. Die hier gewählte Dicke s des Streifens 9 beträgt außerhalb dieser Zuspitzungen 2,0 mm.

Diese Dicke ist umso größer zu wählen, desto zugweicher die Festigkeitsträger sind und desto höher der vorgesehene Luftdruck im Betrieb ist. Denn desto größer die Dehnungen der Festigkeitsträger sind, desto größer sind auch die Dehnungsunterschiede wegen doppelter Fadendichte an der Überlappungsstelle, desto größer also auch der zu bekämpfende Effekt.

Weil die Reifengröße und der Betriebsluftdruck dem Karkassenkonstrukteur noch nicht die auszuwählenden Festigkeitsträger eindeutig determinieren, ihm also vielmehr noch eine gewisse Auswahlmenge zur Verfügung steht, kann die optimale Dicke des Streifens 9 erst nach der Auswahl der Festigkeitsträgertype und deren Bemessung vom Fachmann bemessen werden; mit der Maßgabe, dass die Bogenlängenverkürzung der im Splice 6 unteren Festigkeitsträger gegenüber der Bogenlänge außerhalb des Splices (in etwa gleich der Bogenlänge der Biegeneutralen im Splice) mindestens so groß sein sollte wie die Festigkeitsträgerdehnung außerhalb des Splices 6 unter dem für die Prüfung vorgesehenen Luftdruck (meistens das 1,5-fache des vorgesehenen Betriebsluftdruckes), ist dem Fachmann ein klares Kriterium an die Hand gegeben für die Dickenbemessung.

Der zusätzliche Gummistreifen 9 im Splicebereich verschärft das ohnehin vorhandene Problem der Massenanhäufung im Splicebereich. Überraschenderweise aber überwiegt zumindest bei relativ langsamen Reifen, insbesondere bei Transporter-Reifen, die häufig nur bis 160 km/h zugelassen sind und bei Leicht-LKW-Reifen, die in der Regel nur bis 120 km/h zugelassen sind und bei einigen PKW-Reifen mit Speed-Index T, die bis 190 km/h zugelassen sind, der Effekt der vergleichmäßigten Seitenwandsteifigkeit. Entsprechende erfindungsgemäße Reifen zeigen im statistischen Mittel eine höhere Gleichmäßigkeit im Radialkraftschrieb als entsprechende Reifen nach dem Stande der Technik.

Eine Bezugszeichenliste ist Bestandteil der Beschreibung.

### Bezugszeichenliste:

- 1: Radialkarkasse
- 2: Fahrzeugluftreifen mit Radialkarkasse 1
- 3: Wulstkerne
31 linker Wulstkern
3r rechter Wulstkern
- 4: Lage von Festigkeitsträgern 5
- 5: Festigkeitsträger in Lage 4
- 6: Splice/Überlappung von 4
- 7: unteres Ende der Lage 4, die zur Endlosmachung zusammengefügt bzw. zusammenzufügen sind
- 8: oberes Ende der Lage 4, die zur Endlosmachung zusammengefügt bzw. zusammenzufügen sind
- 9: Erfindungsgemäßer Gummistreifen, der den radialen Abstand zwischen den Enden 7 und 8 der Lage 4 erhöht
- 10: Bereiche, in denen der Gumistreifen 9 endet
- 11: Baumwollfäden zur Luftabfuhr am vor- und nachlaufenden Ende des Gummistreifens 9
- 12: Trommel zum Aufbau der Karkasse
- 13: Kernreiter
- d: Außendurchmesser der Kerne 3 = Innendurchmesser der Kernreiter 13
- s: Dicke des Streifens 9 außerhalb seiner nach radial innen weisenden Zuspitzungen
- D: Außendurchmesser der Kernreiter 13
- I: das Intervall, innerhalb dessen gemäß Anspruch 2 die radial inneren Enden des distanzierenden Streifens 9 liegen

## Patentansprüche

1. Radialkarkasse (1) für einen Fahrzeugluftreifen (2) mit einem Verhältnis (H/B) seiner Höhe (H) zu seiner Breite (B) größer oder gleich 55 %, wobei die Radialkarkasse (1) im Querschnitt ununterbrochen von Wulstkern (31) zu Wulstkern (3r) verläuft und mindestens eine Lage (4) von in einer Gummimischung eingebetteten textilen Festigkeitsträgern (5) aufweist, die (5) einen im wesentlichen axial verlaufenden Splice (6) aufweist, an dem sich die Enden (7, 8) der zunächst flach - z. B. auf einem Kalander - erzeugten Lage (4) überlappen, wobei in einem Bogenlängenbereich des Querschnittes des Splices (6) zwischen den übereinander liegenden Enden (7, 8) der Lage (4) ein Gummistreifen (9) angeordnet ist,
**dadurch gekennzeichnet,** dass der besagte Bogenlängenbereich, in dem zwischen den übereinander liegenden Enden (7, 8) der Lage (4) ein Gummistreifen (9) angeordnet ist, in einem Bereich (101) dicht oberhalb des einen Wulkernes (31) beginnt und bis zu einem Bereich (10r) dicht oberhalb des anderen Wulstkernes (3r) reicht.
(Anschließend die ursprünglichen Ansprüche 2 bis 6)

2. Radialkarkasse (1) nach Anspruch 1, dadurch gekennzeichnet, dass die besagten Bereiche (101, 10r) von der radial äußeren Begrenzungsfläche der Wulstkerne (3) bis maximal 10 mm radial außerhalb zum radial äußeren Ende des an sich bekannten Kernfüllers (11) reichen.

3. Radialkarkasse (1) nach Anspruch 1, dadurch gekennzeichnet, dass der Gummistreifen (9) genau von der radial äußeren Begrenzungsfläche des einen Wulstkernes (31) bis zur radial äußeren Begrenzungsfläche des anderen Wulstkernes (3r) reicht.

4. Radialkarkasse (1) nach Anspruch 1, dadurch gekennzeichnet, dass der Gummistreifen (9) aus der gleichen Gummimischung besteht wie die Gummierung der Lage (4), deren Enden (7, 8) durch diesen Gummistreifen im Bereich des Splices (6) radial beabstandet sind.

5. Radialkarkasse nach Anspruch 1, dadurch gekennzeichnet, dass sie auf ihrer radial inneren Seite in an sich bekannter Weise einen Innenliner (12) aus einer Butylkautschuk enthaltenden Mischung aufweist.

6. Verfahren zum Aufbau einer Radialkarkasse (1) gemäß Anspruch 5, wobei - vor dem Auftragen einer oder mehrerer, die Festigkeitsträger (5) enthaltender Lage(n) (4) - in an sich bekannter Weise eine den späteren Innenliner (12) bildende Kautschukschicht aufgetragen und zur Endlosigkeit gefügt wird,
**dadurch gekennzeichnet,** dass vor dem Legen des oberen Endes (8) der die Festigkeitsträger (5) enthaltenden Lage (4) auf deren unteres Ende (7) ein den späteren Gummistreifen (9) bildender Kautschukstreifen auf das untere Ende der Lage (4) gelegt wird.
